# EUROPÄISCHE PATENTANMELDUNG

(11) **EP 0 788 989 A2**
(43) Veröffentlichungstag der Anmeldung: **13.08.1997**
(21) Anmeldenummer: 96112280.1
(22) Anmeldetag: 30.07.1996
(51) Int. Cl.: B65G 69/18

(54) **Vorrichtung zum Kuppeln von Behältnissen**

(30) Priorität: 20.09.1995 DE 19534915; 17.11.1995 DE 19542939
(71) Anmelder: Buck Werke GmbH & Co, 73337 Bad Überkingen (DE)
(72) Erfinder: Koch, Martin, Dipl.-Ing., 79395 Neuenburg/Baden (DE); Grau, Gerhard, Dipl.-Ing., 79379 Müllheim/Baden (DE)
(74) Vertreter: Goddar, Heinz J., Dr.

(57) **Zusammenfassung**

Vorrichtung zum Kuppeln von zwei jeweils einen Anschluß-Rohrstutzen (16,18) mit im wesentlichen kreisförmigem Querschnitt aufweisenden Behältnissen, wobei jeder der Rohrstutzen (16,18) eine entsprechende Schließklappe (10,12) aufweist, die aus einer Schließstellung in eine Offenstellung mittels eines Schwenkantriebs überführbar ist, wobei die dem Behältnis abgewandten Stirnflächen der Schließklappen (10,12) in Schließstellung mit der Stirnfläche des betreffenden Rohrstutzens fluchten und wobei die Schließklappen in je einer im wesentlichen kreisförmigen Dichtung gelagert sind, dadurch gekennzeichnet, daß in jedem der Rohrstutzen (16,18) mindestens ein in dessen Wand radial bewegbarer Stift (2,4) in Höhe der Dichtung vorgesehen ist, welcher, wenn er radial nach innen geschoben ist, in der Dichtung eine Wulst (1,1') erzeugt, die die jeweilige Schließklappe (10,12) in ihrer geschlossenen Position hält.

## Beschreibung

Die Erfindung betrifft eine Vorrichtung zum Kuppeln von zwei jeweils einen Anschluß-Rohrstutzen mit im wesentlichen kreisförmigem Querschnitt aufweisenden Behältnissen, wobei jeder der Rohrstutzen nahe seinem dem ihn tragenden Behältnis abgewandten Ende eine um einen Durchmesser des Rohrstutzens um im wesentlichen 90° schwenkbare, mit ihrem Außendurchmesser im wesentlichen dem Innendurchmesser des Rohrstutzens entsprechende Schließklappe mit im wesentlichen kreisförmigem Querschnitt aufweist, die aus einer Schließstellung, in der sie im wesentlichen quer zur Längsmittelachse des betreffenden Rohrstutzens steht, in eine Offenstellung, in der sie im wesentlichen parallel zur Längsmittelachse des betreffenden Rohrstutzens steht, mittels eines Schwenkantriebs überführbar ist, wobei die Schließklappen mittels jeweils einer im Querschnitt im wesentlichen halbkreissektorförmigen Halbachse, deren ebene, dem den jeweiligen Rohrstutzen tragenden Behältnis abgewandten Stirnfläche im wesentlichen mit der dem betreffenden Behältnis abgewandten Stirnfläche der betreffenden Schließklappe fluchtet und die mit der jeweiligen Schließklappe fest verbunden ist, derart in jeweils zwei diametral einander gegenüberliegenden, zur jeweiligen Halbachse komplementären Lagerschalen, die sich zur Stirnfläche des betreffenden Rohrstutzens öffnen, gelagert sind, daß die Stirnflächen in Schließstellung mit der Stirnfläche des betreffenden Rohrstutzens fluchten, wobei nur eine der Halbachsen unmittelbar durch den Schwenkantrieb beaufschlagbar ist und beide Schließklappen nach zentriertem Aneinanderdrücken der Stirnflächen der Rohrstutzen mittels des Schwenkantriebes unter Mitnehmen der nicht unmittelbar angetriebenen Schließklappe um eine aus den beiden Halbachsen gebildete Vollachse zwischen ihrer Schließ- und ihrer Offenstellung in dem aus den beiden Lagerschalen gebildeten Lager verschwenkbar sind und wobei die Schließklappen in je einer im wesentlichen kreisförmigen Dichtung gelagert sind.

Eine solche Vorrichtung zum Kuppeln ist in der DE-C-43 42 962 beschrieben und wird beispielsweise in der chemischen oder pharmazeutischen Industrie eingesetzt. Es müssen dort häufig mit Anschluß-Rohrstutzen versehene Behältnisse in einer Weise miteinander gekuppelt werden, daß ein in einem der Behälter vorhandenes fließfähiges oder streufähiges Produkt in den anderen Behälter überführt werden kann, ohne daß das Produkt mit der Außenatmosphäre in Berührung kommt.

Um dies zu gewährleisten, sind die an den jeweiligen Rohrstutzen vorgesehenen Schließklappen so angeordnet, daß ihre Stirnflächen in Schließstellung mit der Stirnfläche des betreffenden Rohrstutzens fluchten. Sollen nun zwei Behältnisse miteinander gekoppelt werden, so werden die jeweiligen Rohrstutzen entsprechend positioniert und die mit diesen fluchtenden Schließklappen aneinandergedrückt. Die Schließklappen werden dann als eine Einheit um im wesentlichen 90° gedreht, so daß der Produkttransport von einem Behältnis in das andere stattfinden kann.

In der Regel wird ein Behältnis mit einem Rohrstutzen, der durch einen aktive Schließklappe verschlossen ist, mit einem Behältnis, dessen Rohrstutzen mit einer passiven Schließklappe verschlossen ist, verbunden. Eine aktive Schließklappe ist in diesem Falle eine Klappe, die mit einem Schwenkantrieb verbunden ist, der eine Kraft auf die Schließklappe ausüben kann, um diese um eine in Durchmesserrichtung bezüglich des Rohrstutzens liegende Schwenkachse zu drehen. Die passive Schließklappe weist keine Verbindung zu solch einem Schwenkantrieb auf, sondern wird indirekt durch die aktive Schließklappe, die, wie oben beschrieben, in Kontakt mit der passiver Schließklappe steht, mitgeführt.

Es ist damit sichergestellt, daß der Produkttransport stattfinden kann, ohne daß Teile des Innenraums der Behältnisse der Atmosphäre ausgesetzt werden. Auch sind nach dem Verschließen der Rohrstutzen und dem Trennen der beiden Behältnisse keinerlei Bereiche der Behältnisse freiliegend, die mit dem möglicherweise toxischen Produkt in Kontakt gewesen sind.

Nach dem Trennen der Behältnisse besteht jedoch die Gefahr, daß ein unkontrolliertes Öffnen der Schließklappen die Behältnisse zur Atmosphäre hin öffnet, das Produkt der Atmosphäre und damit möglichen Verunreinigungen ausgesetzt wird oder sogar das fließ- oder streufähige Produkt aus einem Behältnis entweicht.

Gerade eine passive Schließklappe, die frei zugänglich an der Außenseite eines Rohrstutzens liegt und nicht durch die zusätzliche Kraft eines Schwenkantriebs in ihrer geschlossener Position gehalten wird, ist damit der besonderen Gefahr ausgesetzt, durch ein versehentliches und unbeabsichtigtes Ausüben einer äußeren Kraft auf sie, die zum Beispiel durch ein Aufstützen eines Bedieners hervorgerufen werden kann, geöffnet zu werden. Eine Kraftausübung kann aber auch eine aktive Schließklappe öffnen, wenn die Kraft so groß ist, daß der Schwenkantrieb ebenfalls mitgedreht wird. Nachdem im allgemeinen keine großen Kräfte für den Schwenkantrieb und das Drehen der Schließklappen notwendig sind, kann ein solches Ereignis zu jeder Zeit während des Gebrauchs oder des Transportes der Behältnisse geschehen.

Der Erfindung liegt demnach die Aufgabe zugrunde, eine gattungsgemäße Vorrichtung störunanfälliger auszubilden.

Erfindungsgemäß wird die Aufgabe dadurch gelöst, daß in jedem der Rohrstutzen mindestens ein in dessen Wand radial bewegbarer Stift in Höhe der Dichtung vorgesehen ist, welcher, wenn er radial nach innen geschoben ist, in der Dichtung eine Wulst erzeugt, die die jeweilige Schließklappe in ihrer geschlossenen Position hält.

Bei einer besonders vorteilhaften Ausgestaltung der Erfindung wird der mindestens eine Stift durch mindestens eine Exzentervorrichtung betätigt, und die jeweilige Schließklappe wird durch das Betätigen der Exzentervorrichtung verriegelt oder entriegelt. Dadurch wird eine besonders einfach zu bedienende Vorrichtung zum Verriegeln bzw. zum Entriegeln der Schließklappen zur Verfügung gestellt. Die Exzentervorrichtung setzt eine tangential angewendete Kraft in eine radial auf die Stifte wirkende Kraft um, wodurch ein gleichmäßiges radiales Verschieben der Stifte sichergestellt wird, da dem Bediener oder einem Antrieb ein längerer Hebelarm zur Verfügung steht, als dies der Fall wäre, wenn die Stifte direkt radial nach innen verschoben würden.

Ferner sieht die Erfindung vor, daß alle Exzentervorrichtungen an beiden Rohrstutzen mittels eines gemeinsamen Antriebs betätigbar sind. Dies vermindert die Anzahl der notwendigen Verfahrensschritte zum An- oder Abkoppeln der beiden Behältnisse, wodurch Zeit gespart wird. Vor allem wird damit verhindert, daß eventuell eine Schließklappe durch Unachtsamkeit des Benutzers nicht verriegelt wird.

Die Erfindung sieht auch vor, daß zusätzlich eine Vorrichtung zum kraftschlüssigen Zusammenziehen und zum Verriegeln der beiden Rohrstutzen vorgesehen ist. Es wird damit sichergestellt, daß die Verbindung der beiden Rohrstutzen während des Umfüllvorganges auf keinen Fall gelockert oder gar gelöst werden kann. Dadurch wird ein unbeabsichtigtes Austreten des fließ- oder streufähigen Produktes oder auch eine Kontamination des Produktes durch die Atmosphäre vermieden.

Besonders vorteilhaft ist es, daß die mindestens eine Exzentervorrichtung und die Vorrichtung zum kraftschlüssigen Zusammenziehen und zum Verriegeln der beiden Rohrstutzen mittels eines gemeinsamen Antriebs betätigbar sind. Dadurch wird eine weitere Reduktion der notwendigen Verfahrensschritte erzielt. Ein weitaus wichtigerer Vorteil ist allerdings, daß die Verriegelung bzw. die Entriegelung der beiden Rohrstutzen und die Entriegelung bzw. die Verriegelung der beiden Schließklappen in einem einzigen Arbeitsschritt erfolgt, so daß immer sichergestellt ist, daß die Schließklappen nur dann in einem geöffneten Zustand sein können, wenn die entsprechenden Rohrstutzen gesichert verbunden sind. Ein Trennen der beiden Rohrstutzen ist nur dann möglich, wenn sich die beiden Schließklappen in ihrer geschlossenen Position befinden und in dieser verriegelt sind.

Bei einer bevorzugten Ausführungsform der Erfindung ist an einem der Rohrstutzen ein in axialer Richtung weisender Zentrierdorn und an dem anderen Rohrstutzen eine im wesentlichen komplementär ausgebildete Zentrierhülse zum Vorzentrieren des Rohrstutzens vorgesehen. Dadurch erfolgt bereits beim Vorgang des Andockens eine Vorzentrierung, so daß eine falsche Positionierung und dadurch auftretende Fehlfunktionen oder Beschädigungen vermieden werden. Auch erleichtert es die Arbeit des Bedieners, der nicht dazu gezwungen ist, eine entsprechend sorgfältige optische Zentrierung vorzunehmen.

Ferner ist erfindungsgemäß vorgesehen, daß am Zentrierdorn ein Querstift vorgesehen ist, der durch Betätigen eines Handhebels oder Antriebes die Rohrstutzen über eine in der Zentrierhülse vorgesehene Schräge aneinanderzieht und verriegelt. Eine solche Ausgestaltung stellt sicher, daß das Anpressen und die mechanische Verriegelung der beiden Rohrstutzen ohne eine mögliche Fehlbedienung ablaufen kann. Der Handhebel oder Antrieb kann dabei einfach und gleichmäßig durch den Bediener oder automatisch in die entsprechenden Positionen gebracht werden. Er dient zusätzlich als optische Kontrolle, die den Verriegelungszustand des Systems anzeigt. Es könnten auch entsprechende Markierungen angebracht werden.

Ferner ist es besonders vorteilhaft, daß die Exzentervorrichtung aus einer Exzenterhülse und einem exzentrisch ausgeformten Teil des Zentrierdorns besteht, wobei bei der Drehung des Zentrierdorns die Exzenterhülse von dem Querstift mitgenommen wird. Dadurch werden beide Schließklappen durch einen einziger. Bedienschritt, nämlich die Drehung des Zentrierdorns, verriegelt bzw. entriegelt. Die oben beschriebenen Vorteile eines gemeinsamen Antriebs der jeweiligen Exzentervorrichtungen der einzelnen Rohrstutzen, werden damit verwirklicht.

Die Erfindung sieht ferner vor, daß eine oder beide Schließklappen schwimmend gelagert ist/sind. Die schwimmende Lagerung wird bei allen automatisierten Andockvorgängen benötigt, um die Zentrierung von Rohrstutzen und insbesondere der Halbklappen zu ermöglichen. Um ein Rohr schwimmend zu gestalten, ist es aus dem Stand der Technik bekannt, dieses zu unterbrechen und die beiden zunächst freiliegenden Enden mittels einer Silikonmanschette zu verbinden. Abgesehen davon, daß an der Schnittstelle zwischen Produktrohr und Silikonmanschette eine aufwendige Montage mittels Spannbändern notwendig ist, ergibt sich oftmals das Problem, daß die Verbindung undicht ist oder sich an dieser Material anlagert, das in einem aufwendigen Prozeß entfernt werden muß. Gleichzeitig erhöht sich auch die Störanfälligkeit durch die Vielzahl der Bauteile, die nötig sind, um die Funktion zu gewährleisten.

Besonders bevorzugt ist es daher, wenn die Manschette an ihren beiden Enden jeweils fest mit einem Anschlußelement verbunden, wobei
- eines der Anschlußelemente im Andockbereich an dem ersten Rohrstutzen der Kupplungsvorrichtung festlegbar ist und das andere der Anschlußelemente im Andockbereich an dem zweiten Rohrstutzen festlegbar ist; bzw.
- eines der Anschlußelemente an einer dem Andockbereich abgewandten Seite eines der Anschluß-Rohrstutzen festgelegt ist und das andere der Anschlußelemente an einem mit der Kupplungsvorrichtung verbundenen Produktrohr festlegbar ist.

Die schwimmende Lagerung ist als eine Baugruppe ausgebildet, die in der bevorzugten Anwendung an eine der Halbklappen einerseits und an ein weiterführendes Produktrohr andererseits angekoppelt wird. Dabei wird die schwimmende Lagerung als Baugruppe unter die aktive Halbklappe, also diejenige, die unmittelbar von einem Schwenkantrieb beaufschlagt wird, angebracht. Beim Andockvorgang wird die Passivklappe auf die Aktivklappe aufgesetzt. Die schwimmende Lagerung erlaubt, daß sich die Aktivklappe der Position der Passivklappe anpaßt und eine einfache Zentrierung über die Zentriereinrichtung der Halbklappen erfolgen kann. Dadurch wird sichergestellt, daß sich die Positionierung der Schließklappen automatisch sehr exakt einstellt und daß vor allem der notwendige Anpreßdruck in einem vorher festgelegten Bereich gehalten wird. Dadurch wird der Verschleiß reduziert und entsprechende Verschleißteile weisen eine höhere Lebensdauer auf, in der ohne Beeinträchtigung der Funktion gearbeitet werden kann. Die schwimmende Lagerung gleicht Achsversatz, Winkelversatz und Höhenversatz aus. Es gelingt überdies, mehrere Funktionen in einem Bauteil zu vereinen. Das Produktrohr ist gleichzeitig die schwimmende Lagerung und zusätzlich eine Axialdichtung zu angrenzenden Bauteilen.

Bevorzugt sollte zumindest eines der Anschlußelemente ein Flansch sein.

Weiter hat sich als vorteilhaft erwiesen, wenn die Manschette aus einem Elastomer besteht.

Die beschriebene schwimmende Lagerung kann nicht nur bei dem in der DE 43 42 962 C1 beschriebenen System oder in einem System mit der erfindungsgemäß angesprochenen Verriegelung eingesetzt werden, sondern ganz allgemein dann, wenn es Anschluß-Rohrstutzen, Produktrohre usw. zu kuppeln gilt.

Ein Ausführungsbeispiel der Erfindung wird nachstehend anhand einer schematischen Zeichnung, die eine teilweise durch die Längsmittelachse aufgeschnittene Ansicht von zwei gekuppelten Rohrstutzen zeigt, im einzelnen erläutert.

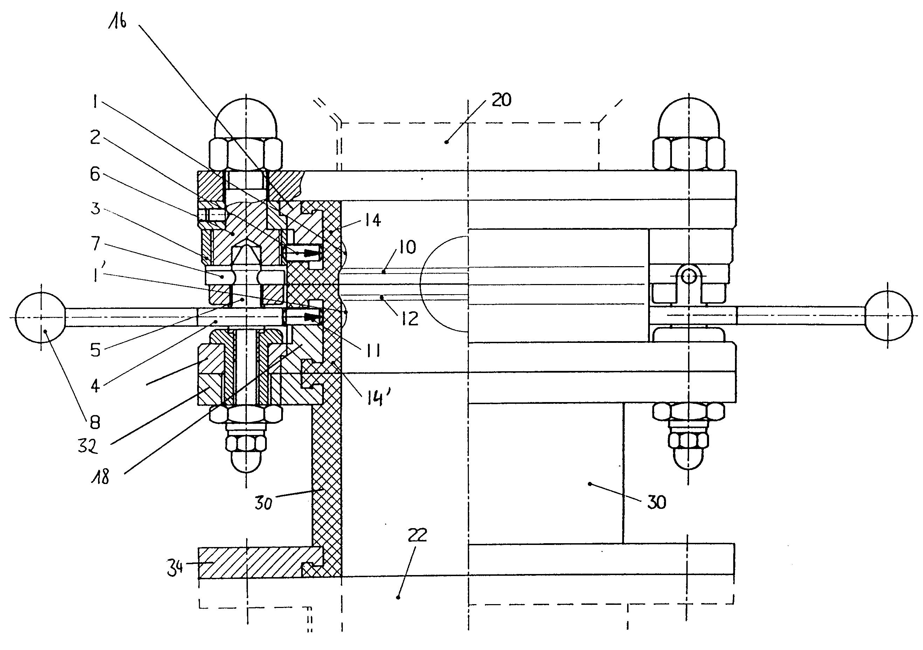

Die Abbildung zeigt einen Zustand, in dem zwei Produktrohre 20, 22, an die jeweils ein Anschluß-Rohrstutzen 16, 18 angeflanscht ist, bereits zusammengeführt worden sind. Die Andockstelle ist die Grenzfläche zwischen einer ersten Schließklappe 10 und einer zweiten Schließklappe 12 in ihrer jeweiligen Schließstellung, bei der also durch die erste Schließklappe 10 der erste Anschluß-Rohrstutzen 16 und das Produktrohr 20 verschlossen wird, durch die zweite Schließklappe 12 der zweite Anschluß-Rohrstutzen 18 bzw. dann auch das zweite Produktrohr 22, das über eine schwimmende Lagerung 30, 32, 34 an den Anschluß-Rohrstutzen 18 gekoppelt ist.

Dazu weist der die zweite Schließklappe 12 umgebende Anschluß-Rohrstutzen 18 an seiner Unterseite einen umlaufenden Verbindungsflansch 180 auf, an den eine Baugruppe 30, 32, 34 angekoppelt ist, welche die schwimmende Lagerung bildet.

Im einzelnen besteht die schwimmende Lagerung aus einer Manschette 30, beispielsweise aus Silikon oder dergleichen, die an beiden offenen Enden in jeweils einen oberen Ringflansch 32 und einen unteren Ringflansch 34 eingelassen ist. Mit dem oberen Ringflansch 32 ist die schwimmende Lagerung an den Verbindungsflansch 180 angeschlossen. Der untere Ringflansch 34 ist an das weiterführende zweite Produktrohr 22 angeschlossen.

In dem hier dargestellten Ausführungsbeispiel ist die Schließklappe 12 eine Aktivklappe, die unmittelbar durch den Schwenkantrieb beaufschlagt ist, während die Klappe 10 eine Passivklappe ist, die nicht direkt mit einem Schwenkantrieb beaufschlagt ist, sondern im angedockten Zustand indirekt durch die Schließklappe 12 mit dieser gedreht wird.

Beim Andockvorgang selbst werden die Anschluß-Rohrstutzen 16, 18 durch ein Eingreifen des Zentrierdornes 5 in die Zentrierhülse 6 positioniert und geführt. Die beiden Anschluß-Rohrstutzen 16, 18 sind soweit angenähert, daß die Schließklappe 10 des Anschluß-Rohrstutzens 16 und die Schließklappe 12 des Anschluß-Rohrstutzens 18 aufeinander liegen.

Dabei erlaubt es die schwimmende Lagerung 30, 32, 34, daß sich die zweite Schließklappe 12 in ihrer Position an die erste Schließklappe 10 anpaßt, so daß Achsversatz, Winkelversatz und Höhenversatz durch das nachgiebige, elastische Material der schwimmenden Lagerung ausgeglichen werden.

An den Schließklappen 10, 12 können - hier nicht gezeigte - Feinzentriereinrichtungen in Form mindestens eines weiteren an der Schließklappe 12 angebrachten Zentrierstiftes und mindestens einer weiteren, damit zusammenwirkenden, an der Schließklappe 10 angebrachten Zentrierbohrung vorgesehen sein. Dadurch wird ein exaktes gegenseitiges Zentrieren der Schließklappen, das auch ein einwandfreies gemeinsames Drehen dieser Klappen sicherstellt, ermöglicht.

Durch ein Betätigen des Handhebels 8, der als gemeinsamer Antrieb sowohl für die Exzentervorrichtungen 3, 4 als auch für die Verriegelungsvorrichtung 7 dient, werden nun mehrere Aufgaben erfüllt. Der am Zentrierdorn 5 angebrachte Querstift 7 wird durch ein Betätigen des Handhebels 8 gedreht. Er greift damit in eine in der Zentrierhülse 6 eingearbeitete Schräge ein und zieht die Anschluß-Rohrstutzen 16, 18 aneinander. In einer Endstellung des Handhebels 8 rastet der Querstift 7 in einer in der Zentrierhülse ausgearbeiteten Endposition ein. Dadurch sind die beiden Anschluß-Rohrstutzen 16, 18 und mit ihnen die Produktrohre 20, 22 zuverlässig miteinander verbunden und der erforderliche Anpreßdruck für ein zuverlässiges Funktionieren der Anlage wird damit eingestellt.

Ferner wird durch ein Betätigen des Handhebels 8 ein exzentrisch ausgeformter Teil 4 des Zentrierdornes 5 gedreht. Dadurch wird die von dem ausgeformten Teil 4 des Zentrierdorns 5 auf den Stift 11 ausgeübte Kraft vermindert und die Bewegung des Stiftes in einer radial nach außen weisenden Richtung freigegeben. Der Stift 11 wird durch die auf ihn wirkende Kraft der elastischen Dichtung 14' radial nach außen gedrückt, so daß die Wulst 1' im Inneren des Anschluß-Rohrstutzens 16 verschwindet.

Auch wird der am Zentrierdorn 5 angebrachte Querstift 7 gedreht. Die durch den Querstift 7 mitgenommene Exzenterhülse 3 gibt damit den Stift 2 ebenfalls frei. Der Stift 2 bewegt sich radial nach außen und die Wulst 1 in der Dichtung 14 des Anschluß-Rohrstutzens 18 verschwindet.

Mit einem Aneinanderpressen und einem Verriegeln der beiden Anschluß-Rohrstutzen 16, 18 werden also gleichzeitig die beiden Schließklappen 10, 12 freigegeben, so daß sie durch einen Schwenkantrieb um im wesentlichen 90° gedreht werden können. Eine direkte Verbindung der Behältnisse durch die Produktrohre 20, 22 wird dadurch freigegeben, und der Produkttransport kann stattfinden.

Ein Trennen der Produktrohre 20, 22 bzw. der Anschluß-Rohrstutzen 16, 18 ist erst dann möglich, wenn die beiden Schließklappen 10, 12 sich wieder in ihrem geschlossenen Zustand befinden. Erst dann kann der Bedienhebel 8 betätigt werden, wodurch gleichzeitig die beiden Stifte 2, 11 durch die Exzenterhülse 3 und den exzentrisch ausgeformten Teil 4 des Zentrierdornes 5 radial nach innen gedrückt werden, die beiden Wulste 1, 1' im Innenraum der Rohrstutzen die Schließklappen 10, 12 in ihrer geschlossenen Position verriegeln und die Verriegelung der beiden Anschluß-Rohrstutzen 16, 18 gelöst wird. Die beiden Produktrohre 20, 22 können dann voneinander getrennt werden.

Im getrennten Zustand sind die Schließklappen 10, 12 gegen ein unbeabsichtigtes Öffnen durch einen möglicherweise ausgeübten Druck auf diese Schließklappen 10, 12 durch die Wülste 1, 1' gesichert.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Vorrichtung zum Kuppeln von zwei jeweils einen Anschluß-Rohrstutzen (16, 18) mit im wesentlichen kreisförmigem Querschnitt aufweisenden Behältnissen, wobei jeder der Rohrstutzen (16, 18) nahe seinem dem ihn tragenden Behältnis abgewandten Ende eine um einen Durchmesser des Rohrstutzens (16, 18) um im wesentlichen 90° schwenkbare, mit ihrem Außendurchmesser im wesentlichen dem Innendurchmesser des Rohrstutzens (16, 18) entsprechende Schließklappe (10, 12) mit im wesentlichen kreisförmigem Querschnitt aufweist, die aus einer Schließstellung, in der sie im wesentlichen quer zur Längsmittelachse des betreffenden Rohrstutzens (16, 18) steht, in eine Offenstellung, in der sie im wesentlichen parallel zur Längsmittelachse des betreffenden Rohrstutzens (16, 18) steht, mittels eines Schwenkantriebs überführbar ist, wobei die Schließklappen (10, 12) mittels jeweils einer im Querschnitt im wesentlichen halbkreissektorförmigen Halbachse, deren ebene, dem den jeweiligen Rohrstutzen (16, 18) tragenden Behältnis abgewandten Stirnfläche im wesentlichen mit der dem betreffenden Behältnis abgewandten Stirnfläche der betreffenden Schließklappe (10, 12) fluchtet und die mit der jeweiligen Schließklappe (10, 12) fest verbunden ist, derart in jeweils zwei diametral einander gegenüberliegenden, zur jeweiligen Halbachse komplementären Lagerschalen, die sich zur Stirnfläche des betreffenden Rohrstutzens (16, 18) öffnen, gelagert sind, daß die Stirnflächen in Schließstellung mit der Stirnfläche des betreffenden Rohrstutzens (16, 18) fluchten, wobei nur eine der Halbachsen unmittelbar durch den Schwenkantrieb beaufschlagbar ist und beide Schließklappen (10, 12) nach zentriertem Aneinanderdrücken der Stirnflächen der Rohrstutzen (16, 18) mittels des Schwenkantriebes unter Mitnehmen der nicht unmittelbar angetriebenen Schließklappe (10) um eine aus den beiden Halbachsen gebildete Vollachse zwischen ihrer Schließ- und ihrer Offenstellung in dem aus den beiden Lagerschalen gebildeten Lager verschwenkbar sind und wobei die Schließklappen (10, 12) in je einer im wesentlichen kreisförmigen Dichtung (14) gelagert sind,
dadurch gekennzeichnet, daß in jedem der Rohrstutzen (16, 18) mindestens ein in dessen Wand radial bewegbarer Stift (2, 11) in Höhe der Dichtung (14, 14') vorgesehen ist, welcher, wenn er radial nach innen geschoben ist, in der Dichtung (14, 14') eine Wulst (1, 1') erzeugt, die die jeweilige Schließklappe (10, 12) in ihrer geschlossenen Position hält.

2. Vorrichtung nach Anspruch 1, dadurch gekennzeichnet, daß der mindestens eine Stift (2, 11) durch mindestens eine Exzentervorrichtung (3, 4) zu betätigen ist und die jeweilige Schließklappe (10, 12) durch das Betätigen der Exzentervorrichtung (3, 4) verriegelt oder entriegelt wird.

3. Vorrichtung nach Anspruch 1 oder 2, dadurch gekennzeichnet, daß alle Exzentervorrichtungen (3, 4) an beiden Rohrstutzen (16, 18) mittels eines gemeinsamen Antriebs (8) betätigbar sind.

4. Vorrichtung nach einem der Ansprüche 1 bis 3, dadurch gekennzeichnet, daß zusätzlich eine Vorrichtung (7) zum kraftschlüssigen Zusammenziehen und zum Verriegeln der beiden Rohrstutzen (16, 18) vorgesehen ist.

5. Vorrichtung nach Anspruch 4, dadurch gekennzeichnet, daß die mindestens eine Exzentervorrichtung (3, 4) und die Vorrichtung (7) zum kraftschlüssigen Zusammenziehen und zum Verriegeln der beiden Rohrstutzen (16, 18) mittels eines gemeinsamen Antriebs (8) betätigbar sind.

6. Vorrichtung nach einem der Ansprüche 1 bis 5, dadurch gekennzeichnet, daß an einem der Rohrstutzen (18) ein in axialer Richtung weisender Zentrierdorn (5) und an dem anderen Rohrstutzen (20) eine im wesentlichen komplementär ausgebildete Zentrierhülse (6) zum Vorzentrieren der Rohrstutzen (16, 18) vorgesehen ist.

7. Vorrichtung nach Anspruch 6, dadurch gekennzeichnet, daß am Zentrierdorn (5) ein Querstift (7) vorgesehen ist, der durch Betätigen eines Handhebels (8) oder Antriebes die Rohrstutzen (16, 18) über eine in der Zentrierhülse (6) vorgesehene Schräge aneinanderzieht und verriegelt.

8. Vorrichtung nach einem der Ansprüche 6 bis 7, dadurch gekennzeichnet, daß die Exzentervorrichtung (3, 4) aus einer Exzenterhülse (3) und einem exzentrisch ausgeformter Teil (4) des Zentrierdorns (5) besteht, wobei bei der Drehung des Zentrierdorns (5) die Exzenterhülse (3) von dem Querstift (7) mitgenommen wird.

9. Vorrichtung nach einem der Ansprüche 1 bis 8, dadurch gekennzeichnet, daß mindestens eine der beiden Schließklappen (10, 12) schwimmend gelagert ist.

10. Vorrichtung nach Anspruch 9, dadurch gekennzeichnet, daß die schwimmende Lagerung eine Manschette (30) aus nachgiebigen Material umfaßt, die an ihren beiden Enden jeweils fest mit einem Anschlußelement (32, 34) verbunden ist, wobei
- eines der Anschlußelemente im Andockbereich an dem ersten Rohrstutzen der Kupplungsvorrichtung festlegbar ist und das andere der Anschlußelemente im Andockbereich an dem zweiten Rohrstutzen festlegbar ist; bzw.
- eines der Anschlußelemente (32) an einer dem Andockbereich abgewandten Seite eines der Anschluß-Rohrstutzen (16, 18) festgelegt ist und das andere der Anschlußelemente (34) an einem mit der Kupplungsvorrichtung verbundenen Produktrohr (22) festlegbar ist.

11. Vorrichtung nach Anspruch 10, dadurch gekennzeichnet, daß zumindest eines der Anschlußelemente (32, 34) ein Flansch ist.

12. Vorrichtung nach Anspruch 10 oder 11, dadurch gekennzeichnet, daß die Manschette (30) aus einem Elastomer besteht
